# EUROPEAN PATENT APPLICATION

(11) **EP 4 744 950 A1**
(43) Date of publication of application: **20.05.2026**
(21) Application number: 25209435.4
(22) Date of filing: 17.10.2025
(51) Int. Cl.: B60L 53/65, B60L 55/00, B60L 53/66

(54) **CONTROL DEVICE FOR VEHICLE AND VEHICULAR POWER FEEDING FACILITY**

(30) Priority: 13.11.2024 JP 2024198112
(71) Applicant: TOYOTA JIDOSHA KABUSHIKI KAISHA, Toyota-shi, Aichi-ken 471-8571 (JP)
(72) Inventor: KANAMARU, Keisuke, Aichi-ken, 471-8571 (JP); SAKAKIBARA, Naoya, Aichi-ken, 471-8571 (JP)
(74) Representative: D Young & Co LLP

(57) **Abstract**

A control device (100) for an electrically powered vehicle (1) is a control device for an electrically powered vehicle including a drive battery (30) capable of charging/power feeding between the drive battery and an EVSE (300). The control device includes a processor (110, 140), and a communication unit (140) that communicates with the EVSE. When a predetermined condition for performing charging/power feeding between the EVSE and the drive battery is satisfied, the processor controls the communication unit to communicate information indicating to make transition to a charging/power feeding mode for performing charging/power feeding between the drive battery and the EVSE (S116, S117, S152, S153, S154), and when the predetermined condition is not satisfied, the processor controls the communication unit to communicate information indicating to make transition to a charging mode for performing charging from the EVSE to the drive battery (S116, S121, S152, S153, S155). It is possible to appropriately switch between charging and charging/power feeding.

## Description

### CROSS REFERENCE TO RELATED APPLICATIONS

This nonprovisional application is based on Japanese Patent Application No. 2024-198112 filed on November 13, 2024 with the Japan Patent Office, the entire contents of which are hereby incorporated by reference.

### BACKGROUND

### Field

The present disclosure relates to a control device for a vehicle and a vehicular power feeding facility, and in particular, to a control device for a vehicle including a power storage device capable of charging/power feeding between the power storage device and a vehicular power feeding facility, and a vehicular power feeding facility that can perform charging/power feeding between the vehicular power feeding facility and a power storage device of a vehicle.

### Description of the Background Art

Conventionally, there has been known a vehicle that can sense a charging mode for performing charging from the outside of the vehicle to a power storage device of the vehicle, and a power feeding mode for supplying power from the power storage device of the vehicle to the outside of the vehicle (see, for example, WO 2014/068782).

### SUMMARY

The technique of WO 2014/068782 has assumed switching between the charging mode and the power feeding mode. However, it has not considered a case where there are both a charging stand having a function of charging only and a charging/power feeding stand having functions of charging and power feeding. Further, in a system in which an incentive is provided to a user of a vehicle for power feeding from the vehicle to a power system, when authentication for providing the incentive is not given to a combination of the vehicle and a stand, there is a possibility that the incentive is not provided to the user. Accordingly, there is a need for a technique of determining a function of charging or power feeding of a vehicular power feeding facility such as a charging/power feeding stand and a charging stand.

The present disclosure has been made to solve the aforementioned problem, and an object thereof is to provide a control device for a vehicle and a vehicular power feeding facility capable of appropriately switching between charging and charging/power feeding.

A control device for a vehicle according to the present disclosure is a control device for a vehicle including a power storage device capable of charging/power feeding between the power storage device and a vehicular power feeding facility. The control device includes a processor, and a communication unit that communicates with the vehicular power feeding facility. When a predetermined condition for performing charging/power feeding between the vehicular power feeding facility and the power storage device is satisfied, the processor controls the communication unit to communicate information indicating to make transition to a charging/power feeding mode for performing charging/power feeding between the power storage device and the vehicular power feeding facility, and when the predetermined condition is not satisfied, the processor controls the communication unit to communicate information indicating to make transition to a charging mode for performing charging from the vehicular power feeding facility to the power storage device.

With such a configuration, when the predetermined condition for performing charging/power feeding between the vehicular power feeding facility and the power storage device is satisfied, transition to the charging/power feeding mode for performing charging/power feeding between the power storage device and the vehicular power feeding facility is made, and when the predetermined condition is not satisfied, transition to the charging mode for performing charging from the vehicular power feeding facility to the power storage device is made. As a result, it is possible to provide a control device for a vehicle capable of appropriately switching between charging and charging/power feeding.

The predetermined condition may include a condition that authentication for charging/power feeding between the vehicular power feeding facility and the vehicle is obtained.

With such a configuration, when the condition that authentication for charging/power feeding between the vehicular power feeding facility and the vehicle is obtained is satisfied, transition to the charging/power feeding mode for performing charging/power feeding between the power storage device and the vehicular power feeding facility is made. As a result, it is possible to appropriately switch between charging and charging/power feeding.

The predetermined condition may include a condition that connection of communication between the vehicular power feeding facility and the vehicle is completed.

With such a configuration, when the condition that connection of communication between the vehicular power feeding facility and the vehicle is completed is satisfied, transition to the charging/power feeding mode for performing charging/power feeding between the power storage device and the vehicular power feeding facility is made. As a result, it is possible to appropriately switch between charging and charging/power feeding.

The predetermined condition may include a condition that a grid code is complied with, the grid code being a rule to be followed by the vehicular power feeding facility connected to a power system.

With such a configuration, when the condition that the grid code is complied with is satisfied, the grid code being a rule to be followed by the vehicular power feeding facility connected to the power system, transition to the charging/power feeding mode for performing charging/power feeding between the power storage device and the vehicular power feeding facility is made. As a result, it is possible to appropriately switch between charging and charging/power feeding.

The processor may determine whether the predetermined condition is satisfied. With such a configuration, the vehicle can appropriately determine whether the predetermined condition for performing charging/power feeding between the vehicular power feeding facility and the power storage device is satisfied.

The vehicle may further include a notification device, and the processor may control the notification device to notify which of the charging/power feeding mode and the charging mode is entered in different manners.

With such a configuration, it is possible to appropriately notify a user of the vehicle of which of the charging/power feeding mode and the charging mode is entered.

The processor may control the communication unit to transmit an instruction that notifies which of the charging/power feeding mode and the charging mode is entered in different manners, to a communication terminal of a user of the vehicle.

With such a configuration, it is possible to appropriately notify a user of the vehicle of which of the charging/power feeding mode and the charging mode is entered.

The vehicle may further include a notification device, and when the predetermined condition is not satisfied, the processor may control the notification device to prompt connection to the vehicular power feeding facility in which the predetermined condition is satisfied.

With such a configuration, when the predetermined condition for performing charging/power feeding between the vehicular power feeding facility and the power storage device is not satisfied, it is possible to prompt a user who wants to use the charging/power feeding mode to connect to the vehicular power feeding facility in which the predetermined condition is satisfied.

When the predetermined condition is not satisfied, the processor may control the communication unit to transmit an instruction that notifies information indicating to prompt connection to the vehicular power feeding facility in which the predetermined condition is satisfied, to a communication terminal of a user of the vehicle.

With such a configuration, when the predetermined condition for performing charging/power feeding between the vehicular power feeding facility and the power storage device is not satisfied, it is possible to prompt a user who wants to use the charging/power feeding mode to connect to the vehicular power feeding facility in which the predetermined condition is satisfied.

The vehicle may further include a notification device, and when the predetermined condition is not satisfied, the processor may control the notification device to notify information indicating to make transition to charging in the charging mode.

With such a configuration, when the predetermined condition for performing charging/power feeding between the vehicular power feeding facility and the power storage device is not satisfied, it is possible to appropriately notify a user of the vehicle that charging/power feeding is not to be performed.

When the predetermined condition is not satisfied, the processor may control the communication unit to transmit an instruction that notifies information indicating to make transition to charging in the charging mode, to a communication terminal of a user of the vehicle.

With such a configuration, when the predetermined condition for performing charging/power feeding between the vehicular power feeding facility and the power storage device is not satisfied, it is possible to appropriately notify the user of the vehicle that charging/power feeding is not to be performed.

The processor may determine continuation of the charging/power feeding mode or the charging mode, based on a result of determination of an SOC of the power storage device. With such a configuration, it is possible to appropriately continue the charging/power feeding mode or the charging mode.

According to another aspect of the present disclosure, a vehicular power feeding facility is a power feeding facility that can perform charging/power feeding between the vehicular power feeding facility and a power storage device of a vehicle, and includes a processor, and a communication unit that communicates with the vehicle. When a predetermined condition for performing charging/power feeding between the vehicular power feeding facility and the power storage device is satisfied, the processor controls the communication unit to communicate information indicating to make transition to a charging/power feeding mode for performing charging/power feeding between the vehicular power feeding facility and the power storage device, and when the predetermined condition is not satisfied, the processor controls the communication unit to communicate information indicating to make transition to a charging mode for performing charging from the vehicular power feeding facility to the power storage device.

With such a configuration, it is possible to provide a vehicular power feeding facility capable of appropriately switching between charging and charging/power feeding.

The processor may determine whether the predetermined condition is satisfied. With such a configuration, the vehicular power feeding facility can appropriately determine whether the predetermined condition for performing charging/power feeding between the vehicular power feeding facility and the power storage device is satisfied.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram schematically showing an overall configuration of an electrically powered vehicle according to the present embodiment.
Fig. 2 is a block diagram showing a flow of control in a first embodiment.
Fig. 3 is a first flowchart showing a flow of control in the first embodiment.
Fig. 4 is a second flowchart showing a flow of control in the first embodiment.
Fig. 5 is a block diagram showing a flow of control in a second embodiment.
Fig. 6 is a flowchart showing a flow of control in the second embodiment.

### DESCRIPTION OF THE PREFERRED EMBODIMENTS

Hereinafter, embodiments of the present disclosure will be described in detail with reference to the drawings. It should be noted that the same or corresponding parts in the drawings will be designated by the same reference numerals, and the description thereof will not be repeated.

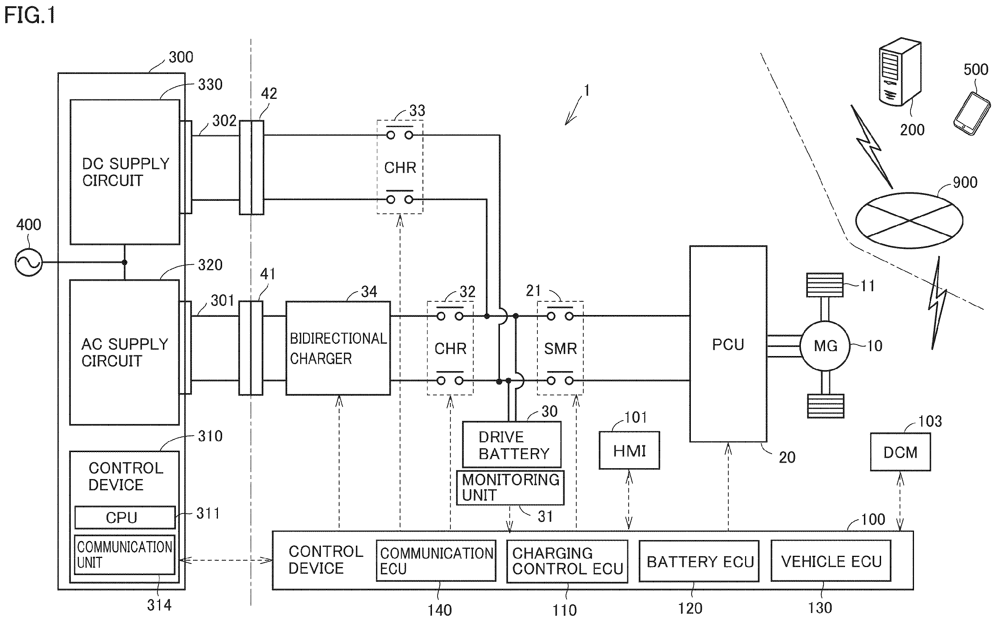

Fig. 1 is a diagram schematically showing an overall configuration of an electrically powered vehicle 1 according to the present embodiment. Fig. 1 shows a situation where electrically powered vehicle 1 and a vehicular power feeding facility (Electric Vehicle Supply Equipment: EVSE) 300 are electrically connected by charging cables 301 and 302. EVSE 300 includes a control device 310. EVSE 300 selectively includes an alternating current (AC) supply circuit 320 and a direct current (DC) supply circuit 330. Control device 310 includes a central processing unit (CPU) 311 and a communication unit 314.

EVSE 300 may be an ordinary charger installed in an ordinary home, for example. In this case, EVSE 300 includes AC supply circuit 320. AC supply circuit 320 is controlled by control device 310, and outputs AC power supplied from a system power supply 400, which is an external power supply, to electrically powered vehicle 1 through charging cable 301. In this case, EVSE 300 does not include charging cable 302 and DC supply circuit 330 for supplying DC power.

EVSE 300 may be a quick charger installed in a charging stand or the like at a location to which electrically powered vehicle 1 travels. In this case, EVSE 300 includes DC supply circuit 330. DC supply circuit 330 is controlled by control device 310, and converts the AC power of system power supply 400, which is an external power supply, into DC power and outputs the DC power to electrically powered vehicle 1 via charging cable 302. In this case, EVSE 300 may also have an ordinary charging function by means of AC supply circuit 320 and charging cable 301, in addition to a quick charging function by means of DC supply circuit 330 and charging cable 302. It should be noted that, when electrically powered vehicle 1 is externally charged, one of charging cable 301 and charging cable 302 is connected to electrically powered vehicle 1.

In addition to the ordinary charging function, AC supply circuit 320 of EVSE 300 may have a reverse power flow function of supplying AC power supplied from electrically powered vehicle 1 via charging cable 301 to system power supply 400. In addition to the quick charging function, DC supply circuit 330 of EVSE 300 may have a reverse power flow function of converting DC power supplied from electrically powered vehicle 1 via charging cable 302 into AC power and supplying the AC power to system power supply 400.

In the present embodiment, electrically powered vehicle 1 is an electric vehicle (Battery Electric Vehicle: BEV). However, electrically powered vehicle 1 may be an externally chargeable plug-in hybrid vehicle (Plug-in Hybrid Electric Vehicle: PHEV) including an internal combustion engine, or may be a fuel cell vehicle (Fuel Cell Electric Vehicle: FCEV) that is externally chargeable and can feed power to the outside. Electrically powered vehicle 1 includes a motor generator 10, drive wheels 11, a power control device (Power Control Unit: PCU) 20, a system main relay (SMR) 21, a drive battery 30, charging relays 32 and 33, a bidirectional charger 34, inlets 41 and 42, and a control device 100. Control device 100 includes a charging control electronic control unit (ECU) 110, a battery ECU 120, a vehicle ECU 130, and a communication ECU 140. Each ECU includes a processor and a memory.

Motor generator 10 is a three-phase AC rotating electric machine, for example. Motor generator 10 rotationally drives drive wheels 11 using power from drive battery 30. Further, motor generator 10 can also generate power by regenerative braking. AC power generated by motor generator 10 is converted into DC power by PCU 20, and the DC power is charged in drive battery 30.

PCU 20 converts the DC power stored in drive battery 30 into AC power and supplies the AC power to motor generator 10, in response to a control signal from vehicle ECU 130 of control device 100. Further, PCU 20 converts the AC power generated by motor generator 10 into DC power and supplies the DC power to drive battery 30, in response to a control signal from vehicle ECU 130.

SMR 21 is electrically connected to a power line connecting PCU 20 and drive battery 30. SMR 21 switches between supply and cut-off of power between PCU 20 and drive battery 30, in response to a control signal from vehicle ECU 130 of control device 100.

Drive battery 30 is a DC power supply configured to be chargeable and dischargeable. In the present embodiment, drive battery 30 is a battery assembly including battery cells (unit cells) electrically connected in series, and is a high-voltage battery. Each battery cell may be a lithium ion secondary battery, a nickel-hydrogen battery, or an all-solid-state battery, for example. A monitoring unit 31 detects a voltage, input/output currents, a temperature, and the like of drive battery 30 (the battery cells), and outputs them to battery ECU 120 of control device 100.

When charging cable 301 is connected to inlet 41, inlet 41 receives the AC power supplied from EVSE 300. Charging relay 32 is electrically connected to a power line connecting drive battery 30 and bidirectional charger 34. Charging relay 32 switches between supply and cut-off of power between drive battery 30 and bidirectional charger 34, in response to a control signal from charging control ECU 110 of control device 100.

Bidirectional charger 34 is configured to include an AC/DC converter, for example, and converts the AC power supplied via charging cable 301 and inlet 41 into DC power and outputs the DC power to charging relay 32. When electrically powered vehicle 1 (drive battery 30) is externally charged using the power supplied from inlet 41 (ordinary charging), charging control ECU 110 closes charging relay 32, and transmits a control signal to bidirectional charger 34 to control supplied power to be supplied to electrically powered vehicle 1. Bidirectional charger 34 converts DC power from charging relay 32 into AC power and outputs the AC power to inlet 41. When electrically powered vehicle 1 (drive battery 30) feeds power to the outside via inlet 41, charging control ECU 110 closes charging relay 32, and transmits a control signal for controlling power to be supplied from electrically powered vehicle 1 to EVSE 300, to bidirectional charger 34.

When charging cable 302 is connected to inlet 42, inlet 42 receives the DC power supplied from EVSE 300. Charging relay 33 is electrically connected to a power line connecting drive battery 30 and inlet 42. Charging relay 33 switches between supply and cut-off of power between drive battery 30 and inlet 42, in response to a control signal from charging control ECU 110 of control device 100. When electrically powered vehicle 1 (drive battery 30) is externally charged using the power supplied from inlet 42 (quick charging), charging control ECU 110 closes charging relay 33, and transmits a control signal for controlling supplied power to be supplied to electrically powered vehicle 1, to control device 310 for EVSE 300. When electrically powered vehicle 1 (drive battery 30) feeds power to the outside via inlet 42, charging control ECU 110 closes charging relay 33, and transmits a control signal for controlling power to be supplied from electrically powered vehicle 1 to EVSE 300, to control device 310 for EVSE 300.

A human machine interface (HMI) 101 is configured to receive an operation by a driver and to inform the driver of the state of electrically powered vehicle 1 and the like, and may be a touch panel display, for example.

A data communication module (DCM) 103 is an interface for wirelessly communicating with external devices such as a server 200 and a communication terminal 500 via a communication network 900.

Communication ECU 140 may communicate with HMI 101, DCM 103, and communication unit 314 of control device 310 for EVSE 300, by power line communication (PLC) or controller area network (CAN), for example. Further, communication ECU 140 controls DCM 103 to perform wireless communication with server 200 and communication terminal 500 via communication network 900. Server 200 can communicate with a plurality of electrically powered vehicles 1 and a plurality of EVSEs 300 via communication network 900, and updates information such as a charging history of each electrically powered vehicle 1, information of each EVSE 300, and the like as needed, and stores such information. The charging history of each electrically powered vehicle 1 is stored in association with a position where charging has been performed (EVSE 300).

In the configuration described above, it is conceivable to switch between a charging mode for performing charging from EVSE 300 to drive battery 30 of electrically powered vehicle 1 and a charging/power feeding mode for performing charging/power feeding between electrically powered vehicle 1 and EVSE 300. As described above, there is conceivable a case where there are both EVSE 300 having a function of charging only and EVSE 300 having functions of charging and power feeding. Further, there is conceivable a system in which an incentive is provided to a user of electrically powered vehicle 1 for power feeding from electrically powered vehicle 1 to a power system such as system power supply 400. In such a system, when authentication for providing the incentive is not given to a combination of electrically powered vehicle 1 and EVSE 300, there is a possibility that the incentive is not provided to the user. Accordingly, there is a need for a technique of determining a function of charging or power feeding of EVSE 300 that can perform charging/power feeding and EVSE 300 that can perform charging only.

Thus, when a predetermined condition for performing charging/power feeding between EVSE 300 and drive battery 30 is satisfied, the processor of charging control ECU 110 of control device 100 for electrically powered vehicle 1 controls communication ECU 140 to communicate information indicating to make transition to a charging/power feeding mode for performing charging/power feeding between drive battery 30 and EVSE 300, and when the predetermined condition is not satisfied, the processor controls communication ECU 140 to communicate information indicating to make transition to a charging mode for performing charging from EVSE 300 to drive battery 30.

Thereby, when the predetermined condition for performing charging/power feeding between EVSE 300 and drive battery 30 is satisfied, transition to the charging/power feeding mode for performing charging/power feeding between drive battery 30 and EVSE 300 is made, and when the predetermined condition is not satisfied, transition to the charging mode for performing charging from EVSE 300 to drive battery 30 is made. As a result, it is possible to appropriately switch between charging and charging/power feeding.

### [First Embodiment]

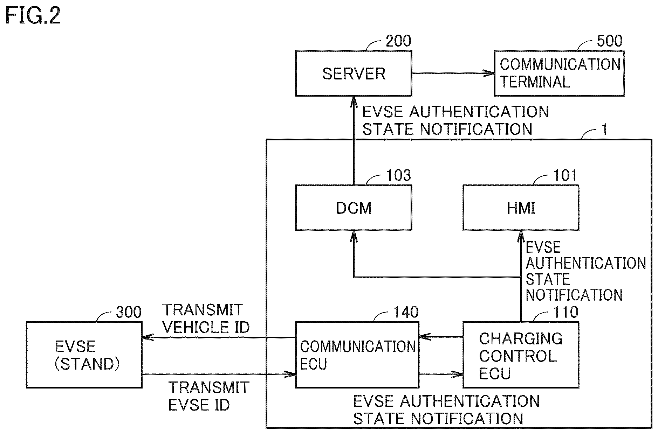

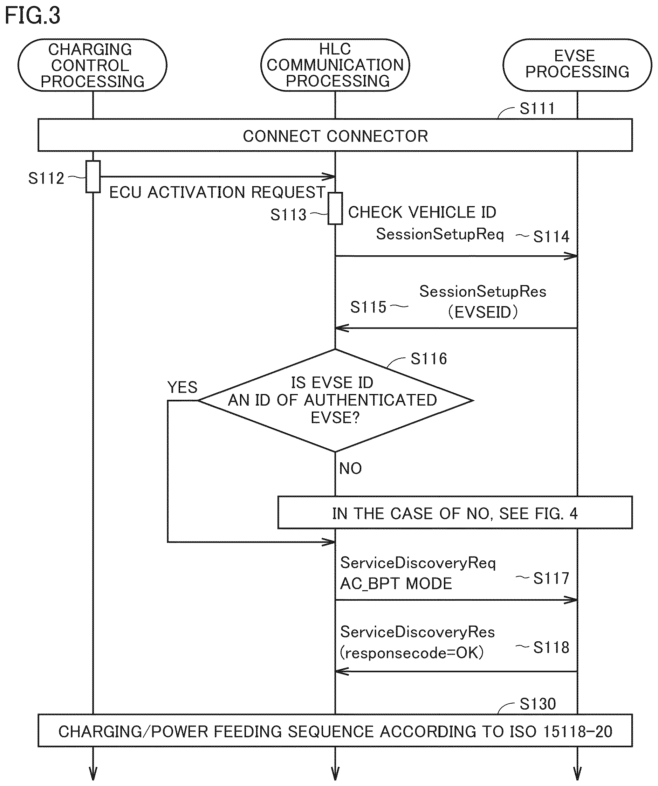

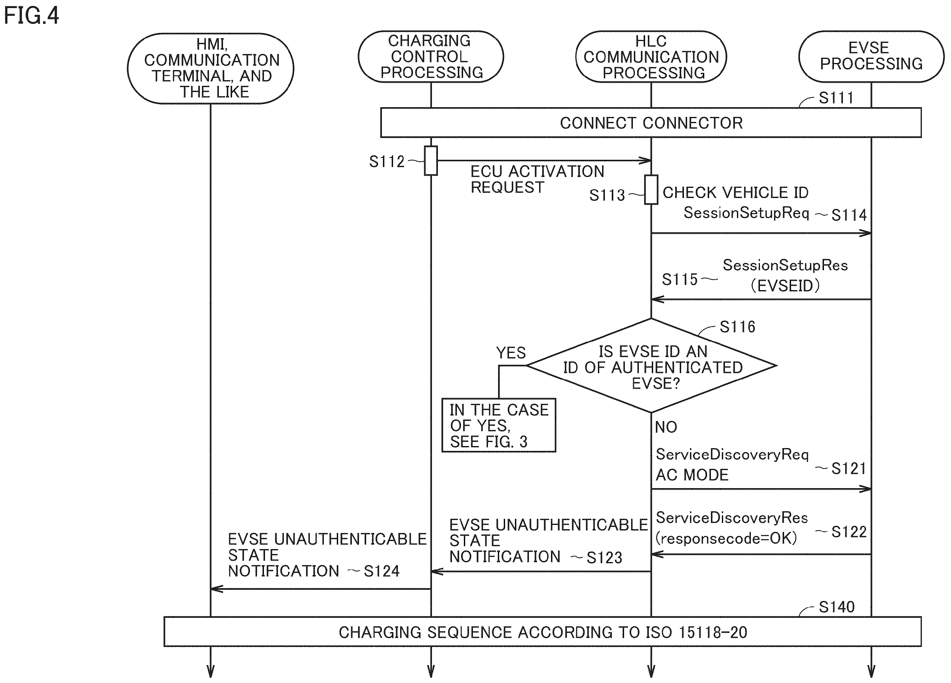

Fig. 2 is a block diagram showing a flow of control in a first embodiment. Fig. 3 is a first flowchart showing a flow of control in the first embodiment. Fig. 4 is a second flowchart showing a flow of control in the first embodiment. Referring to Figs. 2 to 4, in charging control processing, when a connector of charging cable 301 is connected to inlet 41 (step S111), the processor of charging control ECU 110 transmits an ECU activation request including a vehicle ID, which is information that allows electrically powered vehicle 1 to be distinguished from other electrically powered vehicles 1, to communication ECU 140 (step S112).

In high level communication (HLC) communication processing, after the connector is connected, the processor of communication ECU 140 checks whether the received vehicle ID is correct (step S113), and transmits request information "SessionSetupReq" including the vehicle ID to EVSE 300 according to an HLC protocol (step S114).

In EVSE processing, after the connector is connected, upon receiving the request information "SessionSetupReq", CPU 311 of control device 310 for EVSE 300 controls communication unit 314 to transmit response information "SessionSetupRes" including an EVSE ID, which is information that allows EVSE 300 to be distinguished from other EVSEs 300, to electrically powered vehicle 1 according to the HLC protocol (step S115).

In the HLC communication processing, the processor of communication ECU 140 determines whether the received EVSE ID is an ID of authenticated EVSE 300 stored beforehand in the memory at the time of manufacturing (step S116). When the processor of communication ECU 140 determines that the EVSE ID is an authenticated ID (YES in step S116), as shown in Fig. 3, the processor of communication ECU 140 transmits request information "ServiceDiscoveryReq" for requesting charging/power feeding using AC power in an AC_BPT (bidirectional power transfer) mode, to EVSE 300 according to the HLC protocol (step S117). Information indicating to make transition to the charging/power feeding mode using AC power is transmitted.

In the EVSE processing, as shown in Fig. 3, upon receiving the request information "ServiceDiscoveryReq" for requesting charging/power feeding using AC power in the AC_BPT mode, CPU 311 of control device 310 for EVSE 300 starts the AC_BPT mode, and controls communication unit 314 to transmit response information "ServiceDiscoveryRes" including responsecode=OK, which indicates that the requested charging/power feeding in the AC_BPT mode is accepted, to electrically powered vehicle 1 according the HLC protocol (step S118).

Thereafter, as shown in Fig. 3, in the charging control processing, the HLC communication processing, and the EVSE processing, the processor of charging control ECU 110, the processor of communication ECU 140, and CPU 311 of control device 310 for EVSE 300 respectively start a charging/power feeding sequence according to ISO 15118-20 (step S130). In the charging/power feeding sequence, continuation of the charging/power feeding mode is determined based on a result of determination of a state of charge (SOC) of drive battery 30. For example, when the SOC is less than a predetermined value, the charging/power feeding mode may be terminated without being continued, or charging to drive battery 30 may be performed with the charging/power feeding mode being continued, or transition to the charging mode may be made.

On the other hand, when the processor of communication ECU 140 determines that the EVSE ID is not an authenticated ID (NO in step S116), as shown in Fig. 4, the processor of communication ECU 140 transmits request information "ServiceDiscoveryReq" for requesting charging using AC power in an AC mode, to EVSE 300 according to the HLC protocol (step S121). That is, information indicating to make transition to the charging mode using AC power is transmitted.

In the EVSE processing, as shown in Fig. 4, upon receiving the request information "ServiceDiscoveryReq" for requesting charging using AC power in the AC mode, CPU 311 of control device 310 for EVSE 300 starts the AC mode, and controls communication unit 314 to transmit response information "ServiceDiscoveryRes" including responsecode=OK, which indicates that the requested charging in the AC mode is accepted, to electrically powered vehicle 1 according to the HLC protocol (step S122).

In the HLC communication processing, as shown in Fig. 4, upon receiving the response information "ServiceDiscoveryRes" including responsecode=OK, which indicates that charging in the AC mode is accepted, communication ECU 140 transmits an EVSE unauthenticable state notification, which indicates that charging/power feeding of EVSE 300 is unauthenticable and charging in the AC mode is to be performed, to charging control ECU 110 (step S123).

In the charging control processing, as shown in Fig. 4, upon receiving the EVSE unauthenticable state notification, charging control ECU 110 transmits the EVSE unauthenticable state notification to HMI 101, and controls DCM 103 to transmit the EVSE unauthenticable state notification to communication terminal 500 via server 200 (step S124). Upon receiving the EVSE unauthenticable state notification, HMI 101 and communication terminal 500 notify the user that charging/power feeding of EVSE 300 is unauthenticable and charging in the charging mode using AC power is to be performed, by display and/or through sound or voice. It should be noted that information indicating to prompt connection to another EVSE 300 that can perform the charging/power feeding mode may be notified.

Thereafter, as shown in Fig. 4, in the charging control processing, the HLC communication processing, and the EVSE processing, the processor of charging control ECU 110, the processor of communication ECU 140, and CPU 311 of control device 310 for EVSE 300 respectively start a charging sequence according to ISO 15118-20 (step S140). In the charging sequence, continuation of the charging mode is determined based on the result of determination of the SOC of drive battery 30. For example, when the SOC is more than or equal to the predetermined value, or indicates a fully charged state, the charging mode may be terminated without being continued, or transition to the charging/power feeding mode may be made.

It should be noted that, in the HLC communication processing in Fig. 3, upon receiving the response information "ServiceDiscoveryRes" including responsecode=OK, which indicates that charging/power feeding in the AC_BPT mode is accepted, communication ECU 140 may transmit an EVSE authenticable state notification, which indicates that charging/power feeding of EVSE 300 is authenticable, to charging control ECU 110. Then, in the charging control processing in Fig. 3, upon receiving the EVSE authenticable state notification, charging control ECU 110 may transmit the EVSE authenticable state notification to HMI 101, and control DCM 103 to transmit the EVSE authenticable state notification to communication terminal 500 via communication network 900 and server 200. Upon receiving the EVSE authenticable state notification, HMI 101 and communication terminal 500 may notify the user that charging/power feeding of EVSE 300 is authenticable and the charging/power feeding mode using AC power is to be performed, by display and/or through sound or voice.

### [Second Embodiment]

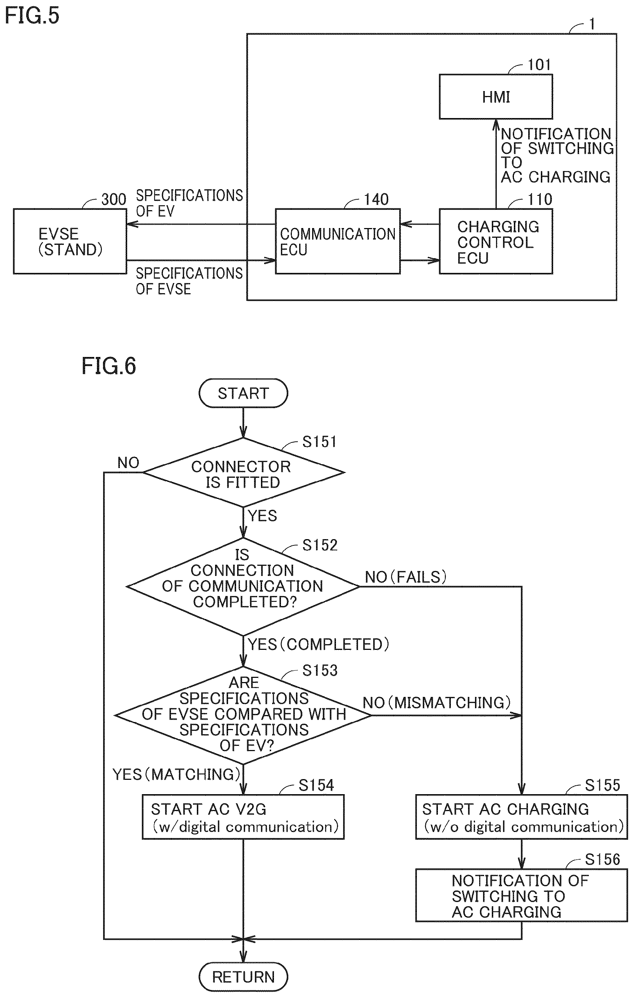

Fig. 5 is a block diagram showing a flow of control in a second embodiment. Fig. 6 is a flowchart showing a flow of control in the second embodiment. Processing shown in the flowchart in Fig. 6 is called from higher-order processing for each predetermined cycle and is performed. Referring to Figs. 5 and 6, the processor of charging control ECU 110 determines whether or not the connector of charging cable 301 is fitted to inlet 41 (step S151). A state in which the connector is fitted refers to a state in which the connector is electrically connected to inlet 41 and the connector is latched. When the processor of charging control ECU 110 determines that the connector is not fitted (NO in step S151), the processor of charging control ECU 110 returns the processing to be performed to the higher-order processing from which the processing in Fig. 6 was called.

On the other hand, when the processor of charging control ECU 110 determines that the connector is fitted (YES in step S151), the processor of charging control ECU 110 determines whether or not connection of HLC communication with EVSE 300 via communication ECU 140 is completed (step S152).

When the processor of charging control ECU 110 determines that the connection of communication is completed (YES in step S152), the processor of charging control ECU 110 compares specifications of EVSE 300 with specifications of electrically powered vehicle 1 (step S153). Specifically, the processor of charging control ECU 110 verifies whether a grid code, which is a rule to be followed by EVSE 300 connected to the power system such as system power supply 400, is complied with, and whether a combination of EVSE 300 and electrically powered vehicle 1 is a combination authenticated according to AC V2G (Alternating Current Vehicle to Grid) defined by EN (European Norm) 50549-1, for example.

When the processor of charging control ECU 110 determines that a result of comparison between the specifications of EVSE 300 and the specifications of electrically powered vehicle 1 is matching (YES in step S153), the processor of charging control ECU 110 starts the AC V2G using digital communication (step S154). In this case, communication ECU 140 is controlled to transmit information indicating to make transition to the charging/power feeding mode using AC power, to EVSE 300. In the AC V2G, continuation of the AC V2G is determined based on a result of determination of the SOC of drive battery 30. For example, when the SOC is less than a predetermined value, the AC V2G may be terminated without being continued, or charging to drive battery 30 may be performed with the AC V2G being continued, or transition to an AC charging mode may be made.

On the other hand, when the processor of charging control ECU 110 determines that the connection of communication fails (NO in step S152) (when PLC connection fails) and when it determines that the result of comparison between the specifications of EVSE 300 and the specifications of electrically powered vehicle 1 is mismatching (NO in step S153), the processor of charging control ECU 110 starts AC charging without using digital communication (step S155). In this case, communication ECU 140 is controlled to transmit information indicating to make transition to the charging mode using AC power, to EVSE 300. The processor of charging control ECU 110 controls HMI 101 to perform notification to indicate that switching to the charging mode using AC power is made (step S156).

It should be noted that, in step S156, the processor of charging control ECU 110 may control communication ECU 140 and DCM 103 to provide a notification indicating that switching to the charging mode using AC power is made, at communication terminal 500 of the user. Further, the processor of charging control ECU 110 may control communication ECU 140 and DCM 103 to notify information indicating to prompt connection to another EVSE 300 that can perform the charging/power feeding mode. In the AC charging mode, continuation of the AC charging mode is determined based on the result of determination of the SOC of drive battery 30. For example, when the SOC is more than or equal to the predetermined value, or indicates a fully charged state, the AC charging mode may be terminated without being continued, or transition to the AC V2G may be made.

When the processor of charging control ECU 110 determines that the connector is not fitted (NO in step S151), after step S154 or after step S156, the processor of charging control ECU 110 returns the processing to be performed to the higher-order processing from which the processing in Fig. 6 was called.

### [Modifications]

(1) In the first and second embodiments described above, as shown in Figs. 1 to 6, charging/power feeding or charging is performed using AC power. However, the present disclosure is not limited thereto, and charging/power feeding or charging may be performed using DC power.
(2) In the first and second embodiments described above, as shown in step S124 in Fig. 4 and step S156 in Fig. 6, a notification indicating that switching to the charging mode using AC power is made is provided. On the other hand, when the charging/power feeding mode using AC power is performed, no notification indicating that switching to the charging/power feeding mode is made is provided. Thereby, which of the charging/power feeding mode and the charging mode is entered is notified in different manners. However, the present disclosure is not limited thereto, and when the charging/power feeding mode using AC power is performed, notification may be performed in a manner different from the manner of notification of the charging mode using AC power, thereby notifying which of the charging/power feeding mode and the charging mode is entered in different manners. As an example of the different manners, different messages may be notified, or different ways of notification may be adopted.
(3) In the first embodiment described above, as shown in Fig. 4, the result of authentication of charging/power feeding of EVSE 300 is notified by HMI 101. However, the present disclosure is not limited thereto, and the result of authentication of charging/power feeding of EVSE 300 may be notified by a meter panel of electrically powered vehicle 1.
(4) In the first embodiment described above, as shown in Figs. 3 and 4, the processing in step S116 is performed by communication ECU 140. However, the present disclosure is not limited thereto, and the processing in step S116 may be performed by charging control ECU 110, may be performed by control device 310 for EVSE 300, or may be performed by control device 310 for EVSE 300 and charging control ECU 110 of electrically powered vehicle 1 in a coordinated manner.
(5) In the second embodiment described above, as shown in Figs. 5 and 6, the processing in Fig. 6 is performed by the processor of charging control ECU 110. However, the present disclosure is not limited thereto, and the processing in Fig. 6 may be performed by CPU 311 of control device 310 for EVSE 300, or may be performed by the processor of charging control ECU 110 and CPU 311 of control device 310 for EVSE 300 in a coordinated manner.
(6) Each of the embodiments described above can be considered as disclosure of electrically powered vehicle 1 or EVSE 300, can be considered as disclosure of control device 100 (charging control ECU 110, communication ECU 140) for electrically powered vehicle 1 or control device 310 for EVSE 300, and can be considered as disclosure of a control method or a control program performed by control device 100 for electrically powered vehicle 1 or control device 310 for EVSE 300.

### [Summary]

(1) As shown in Fig. 1, control device 100 for electrically powered vehicle 1 is control device 100 for electrically powered vehicle 1 including drive battery 30 capable of charging/power feeding between drive battery 30 and EVSE 300. Control device 100 includes a processor (for example, the processor of charging control ECU 110, the processor of communication ECU 140), and a communication unit (for example, communication ECU 140) that communicates with EVSE 300. As shown in Figs. 2 to 6, when a predetermined condition for performing charging/power feeding between EVSE 300 and drive battery 30 is satisfied (for example, in the case of YES in step S116 in Fig. 3, in the case of YES in step S152 and step S153 in Fig. 6), the processor controls the communication unit to communicate information indicating to make transition to a charging/power feeding mode for performing charging/power feeding between drive battery 30 and EVSE 300 (for example, step S117 in Fig. 3, step S154 in Fig. 6), and when the predetermined condition is not satisfied (for example, in the case of NO in step S116 in Fig. 4, in the case of NO in step S152 or step S153 in Fig. 6), the processor controls the communication unit to communicate information indicating to make transition to a charging mode for performing charging from EVSE 300 to drive battery 30 (for example, step S121 in Fig. 4, step S155 in Fig. 6).
   Thereby, when the predetermined condition for performing charging/power feeding between EVSE 300 and drive battery 30 is satisfied, transition to the charging/power feeding mode for performing charging/power feeding between drive battery 30 and EVSE 300 is made, and when the predetermined condition is not satisfied, transition to the charging mode for performing charging from EVSE 300 to drive battery 30 is made. As a result, it is possible to appropriately switch between charging and charging/power feeding.
(2) As shown in step S116 in Figs. 3 and 4 and step S153 in Fig. 6, the predetermined condition may include a condition that authentication for charging/power feeding between EVSE 300 and electrically powered vehicle 1 is obtained.
   Thereby, when the condition that authentication for charging/power feeding between EVSE 300 and electrically powered vehicle 1 is obtained is satisfied, transition to the charging/power feeding mode for performing charging/power feeding between drive battery 30 and EVSE 300 is made. As a result, it is possible to appropriately switch between charging and charging/power feeding.
(3) As shown in step S153 in Fig. 6, the predetermined condition may include a condition that connection of communication between EVSE 300 and electrically powered vehicle 1 is completed.
   Thereby, when the condition that connection of communication between EVSE 300 and electrically powered vehicle 1 is completed is satisfied, transition to the charging/power feeding mode for performing charging/power feeding between drive battery 30 and EVSE 300 is made. As a result, it is possible to appropriately switch between charging and charging/power feeding.
(4) As shown in step S153 in Fig. 6, the predetermined condition may include a condition that a grid code is complied with, the grid code being a rule to be followed by EVSE 300 connected to a power system such as system power supply 400.
   Thereby, when the condition that the grid code is complied with is satisfied, the grid code being a rule to be followed by EVSE 300 connected to the power system such as system power supply 400, transition to the charging/power feeding mode for performing charging/power feeding between drive battery 30 and EVSE 300 is made. As a result, it is possible to appropriately switch between charging and charging/power feeding.
(5) As shown in step S116 in Figs. 3 and 4 and steps S152 and S153 in Fig. 6, the processor of electrically powered vehicle 1 may determine whether the predetermined condition is satisfied. Thereby, electrically powered vehicle 1 can appropriately determine whether the predetermined condition for performing charging/power feeding between EVSE 300 and drive battery 30 is satisfied.
(6) As shown in Fig. 1, electrically powered vehicle 1 further includes a notification device (for example, HMI 101). As shown in step S124 in Fig. 4 and step S156 in Fig. 6, the processor may control the notification device to notify which of the charging/power feeding mode and the charging mode is entered in different manners.
   Thereby, it is possible to appropriately notify a user of electrically powered vehicle 1 of which of the charging/power feeding mode and the charging mode is entered.
(7) As shown in step S124 in Fig. 4 and step S156 in Fig. 6, the processor may control the communication unit to transmit an instruction that notifies which of the charging/power feeding mode and the charging mode is entered in different manners, to communication terminal 500 of a user of electrically powered vehicle 1.
   Thereby, it is possible to appropriately notify the user of electrically powered vehicle 1 of which of the charging/power feeding mode and the charging mode is entered.
(8) As shown in Fig. 1, electrically powered vehicle 1 further includes a notification device (for example, HMI 101). As shown in step S124 in Fig. 4 and step S156 in Fig. 6, when the predetermined condition is not satisfied, the processor may control the notification device to prompt connection to EVSE 300 in which the predetermined condition is satisfied.
   Thereby, when the predetermined condition for performing charging/power feeding between EVSE 300 and drive battery 30 is not satisfied, it is possible to prompt a user who wants to use the charging/power feeding mode to connect to EVSE 300 in which the predetermined condition is satisfied.
(9) As shown in step S124 in Fig. 4 and step S156 in Fig. 6, when the predetermined condition is not satisfied, the processor may control the communication unit to transmit an instruction that notifies information indicating to prompt connection to EVSE 300 in which the predetermined condition is satisfied, to communication terminal 500 of a user of electrically powered vehicle 1.
   Thereby, when the predetermined condition for performing charging/power feeding between EVSE 300 and drive battery 30 is not satisfied, it is possible to prompt the user who wants to use the charging/power feeding mode to connect to EVSE 300 in which the predetermined condition is satisfied.
(10) As shown in Fig. 1, electrically powered vehicle 1 further includes a notification device (for example, HMI 101). As shown in step S124 in Fig. 4 and step S156 in Fig. 6, when the predetermined condition is not satisfied, the processor may control the notification device to notify information indicating to make transition to charging in the charging mode.
   Thereby, when the predetermined condition for performing charging/power feeding between EVSE 300 and drive battery 30 is not satisfied, it is possible to appropriately notify a user of electrically powered vehicle 1 that charging/power feeding is not to be performed.
(11) As shown in step S124 in Fig. 4 and step S156 in Fig. 6, when the predetermined condition is not satisfied, the processor may control the communication unit to transmit an instruction that notifies information indicating to make transition to charging in the charging mode, to communication terminal 500 of a user of electrically powered vehicle 1.
   Thereby, when the predetermined condition for performing charging/power feeding between EVSE 300 and drive battery 30 is not satisfied, it is possible to appropriately notify the user of electrically powered vehicle 1 that charging/power feeding is not to be performed.
(12) As shown in step S130 in Fig. 3 and step S140 in Fig. 4, the processor may determine continuation of the charge/discharging mode or the charging mode, based on a result of determination of an SOC of drive battery 30. Thereby, it is possible to appropriately continue the charging/power feeding mode or the charging mode.
(13) As shown in Fig. 1, EVSE 300 is a power feeding facility that can perform charging/power feeding between EVSE 300 and drive battery 30 of electrically powered vehicle 1, and includes CPU 311 of control device 310, and communication unit 314 that communicates with electrically powered vehicle 1. As shown in Figs. 5 and 6, when a predetermined condition for performing charging/power feeding between EVSE 300 and drive battery 30 is satisfied (for example, in the case of YES in step S152 and step S153 in Fig. 6), CPU 311 of control device 310 controls communication unit 314 to communicate information indicating to make transition to a charging/power feeding mode for performing charging/power feeding between EVSE 300 and drive battery 30 (for example, step S154 in Fig. 6), and when the predetermined condition is not satisfied (for example, in the case of NO in step S152 or step S153 in Fig. 6), CPU 311 of control device 310 controls communication unit 314 to communicate information indicating to make transition to a charging mode for performing charging from EVSE 300 to drive battery 30 (for example, step S155 in Fig. 6). Thereby, it is possible to appropriately switch between charging and charging/power feeding.
(14) As shown in Figs. 5 and 6, CPU 311 of control device 310 may determine whether the predetermined condition is satisfied (for example, step S152, step S153). Thereby, EVSE 300 can appropriately determine whether the predetermined condition for performing charging/power feeding between EVSE 300 and drive battery 30 is satisfied.

Although the embodiments of the present disclosure have been described, it should be understood that the embodiments disclosed herein are illustrative and non-restrictive in every respect. The scope of the present disclosure is defined by the scope of the claims, and is intended to include any modifications within the scope and meaning equivalent to the scope of the claims.

## Claims

1. A control device (100) for a vehicle (1) including a power storage device (30) capable of charging/power feeding between the power storage device and a vehicular power feeding facility (300), the control device comprising:
a processor (110, 140); and
a communication unit (140) that communicates with the vehicular power feeding facility, wherein
when a predetermined condition for performing charging/power feeding between the vehicular power feeding facility and the power storage device is satisfied, the processor controls the communication unit to communicate information indicating to make transition to a charging/power feeding mode for performing charging/power feeding between the power storage device and the vehicular power feeding facility (S116, S117, S152, S153, S154), and
when the predetermined condition is not satisfied, the processor controls the communication unit to communicate information indicating to make transition to a charging mode for performing charging from the vehicular power feeding facility to the power storage device (S116, S121, S152, S153, S155).

2. The control device for the vehicle according to claim 1, wherein the predetermined condition includes a condition that authentication for charging/power feeding between the vehicular power feeding facility and the vehicle is obtained (S116, S153).

3. The control device for the vehicle according to claim 1, wherein the predetermined condition includes a condition that connection of communication between the vehicular power feeding facility and the vehicle is completed (S153).

4. The control device for the vehicle according to claim 1, wherein the predetermined condition includes a condition that a grid code is complied with, the grid code being a rule to be followed by the vehicular power feeding facility connected to a power system (S153).

5. The control device for the vehicle according to claim 1, wherein the processor determines whether the predetermined condition is satisfied (S116, S152, S153).

6. The control device for the vehicle according to claim 1, wherein
the vehicle further includes a notification device (101), and
the processor controls the notification device to notify which of the charging/power feeding mode and the charging mode is entered in different manners (S124, S156).

7. The control device for the vehicle according to claim 1, wherein the processor controls the communication unit to transmit an instruction that notifies which of the charging/power feeding mode and the charging mode is entered in different manners, to a communication terminal (500) of a user of the vehicle (S124, S156).

8. The control device for the vehicle according to claim 1, wherein
the vehicle further includes a notification device (101), and
when the predetermined condition is not satisfied, the processor controls the notification device to prompt connection to the vehicular power feeding facility in which the predetermined condition is satisfied (S124, S156).

9. The control device for the vehicle according to claim 1, wherein, when the predetermined condition is not satisfied, the processor controls the communication unit to transmit an instruction that notifies information indicating to prompt connection to the vehicular power feeding facility in which the predetermined condition is satisfied, to a communication terminal of a user of the vehicle (S124, S156).

10. The control device for the vehicle according to claim 1, wherein
the vehicle further includes a notification device (101), and
when the predetermined condition is not satisfied, the processor controls the notification device to notify information indicating to make transition to charging in the charging mode (S124, S156).

11. The control device for the vehicle according to claim 1, wherein, when the predetermined condition is not satisfied, the processor controls the communication unit to transmit an instruction that notifies information indicating to make transition to charging in the charging mode, to a communication terminal (500) of a user of the vehicle (S124, S156).

12. The control device for the vehicle according to claim 1, wherein the processor determines continuation of the charging/power feeding mode or the charging mode, based on a result of determination of an SOC of the power storage device (S130, S140).

13. A vehicular power feeding facility (300) that can perform charging/power feeding between the vehicular power feeding facility and a power storage device (30) of a vehicle (1), the vehicular power feeding facility comprising:
a processor (310, 311); and
a communication unit (314) that communicates with the vehicle, wherein
when a predetermined condition for performing charging/power feeding between the vehicular power feeding facility and the power storage device is satisfied, the processor controls the communication unit to communicate information indicating to make transition to a charging/power feeding mode for performing charging/power feeding between the vehicular power feeding facility and the power storage device (S152, S153, S154), and
when the predetermined condition is not satisfied, the processor controls the communication unit to communicate information indicating to make transition to a charging mode for performing charging from the vehicular power feeding facility to the power storage device (S152, S153, S155).

14. The vehicular power feeding facility according to claim 13, wherein the processor determines whether the predetermined condition is satisfied (S152, S153).
